# EUROPEAN PATENT APPLICATION

(11) **EP 4 685 874 A1**
(43) Date of publication of application: **28.01.2026**
(21) Application number: 25188906.9
(22) Date of filing: 10.07.2025
(51) Int. Cl.: H01M 4/36, H01M 4/505, H01M 4/525, H01M 10/0525, H01M 4/02

(54) **CATHODE FOR LITHIUM SECONDARY BATTERY AND LITHIUM SECONDARY BATTERY INCLUDING THE SAME**

(30) Priority: 25.07.2024 KR 20240098247; 23.06.2025 KR 20250082635
(71) Applicant: SK On Co., Ltd., Seoul 03161 (KR)
(72) Inventor: BAE, Ji Hee, 34124 Daejeon (KR); KIM, Jae Ram, 34124 Daejeon (KR); LEE, Myung Ro, 34124 Daejeon (KR); NA, Ji Won, 34124 Daejeon (KR); PARK, So Hyun, 34124 Daejeon (KR); BAE, Sang Won, 34124 Daejeon (KR); YEON, Jeong Seok, 34124 Daejeon (KR)
(74) Representative: Stolmár & Partner Patentanwälte PartG mbB

(57) **Abstract**

A cathode for a lithium secondary battery and a lithium secondary battery including the same are provided. The cathode for a lithium secondary battery includes a cathode current collector, a first cathode mixture layer disposed on at least one surface of the cathode current collector, and including a first cathode active material being a lithium transition metal oxide particle having a single-crystal structure, and a second cathode mixture layer disposed on the first cathode mixture layer, and including a second cathode active material being a lithium transition metal oxide particle having a secondary particle structure.

## Description

### TECHNICAL FIELD

The disclosure and implementations disclosed in this patent document generally relate to a cathode for a lithium secondary battery and a lithium secondary battery including the same.

### BACKGROUND

Due to the increased use of portable electronic devices and environmental issues such as CO₂ emissions from fossil fuel use, the spread of electric vehicles using secondary batteries as a power source has been rapidly increasing, and demand for secondary batteries has rapidly increased. Along with this increase in demand, demand for high capacity and high safety in secondary batteries is also increasing.

To improve the performance of these lithium secondary batteries, it is necessary to develop technologies that may improve the energy density, lifespan performance, and the like of the cathode for a lithium secondary battery.

### SUMMARY

The present disclosure can be implemented in some embodiments to provide a cathode for a lithium secondary battery having excellent storage performance and lifespan characteristics.

The present disclosure can be implemented in some embodiments to provide a cathode for a lithium secondary battery having reduced gas generation and improved swelling phenomenon.

The present disclosure can be implemented in some embodiments to provide a lithium secondary battery having excellent performance even when stored for a long period of time at high temperatures, and having reduced gas generation.

In some embodiments of the present disclosure, a cathode for a lithium secondary battery includes a cathode current collector; a first cathode mixture layer disposed on at least one surface of the cathode current collector, and including a first cathode active material being a lithium transition metal composite oxide particle having a single-crystal structure; and a second cathode mixture layer disposed on the first cathode mixture layer, and including a second cathode active material being a lithium transition metal composite oxide particle having a secondary particle structure.

The first cathode active material may include nickel, and a nickel content of the first cathode active material may be 80 mol% or more of all elements excluding lithium and oxygen.

The first cathode active material may be at least one selected from lithium transition metal composite oxides represented by chemical formulas 1 to 3.

[Chemical Formula 1] LiNiₐCo_{b}Mn_{c}O₂,

where 0.8≤a<1, 0<b<0.2, 0<c<0.2, and a+b+c=1.

[Chemical Formula 2] LiNi_{d}CoₑAl_{f}O₂,

where 0.8≤d<1, 0<e<0.2, 0<f<0.2, and d+e+f=1.

[Chemical Formula 3] LiNi_{g}CoₕMnᵢAlⱼO₂,

where 0.8≤g<1, 0<h<0.2, 0<i<0.2, 0<j<0.2, and g+h+i+j=1.

The second cathode active material may include nickel, and a nickel content of the second cathode active material may be 80 mol% or more of all elements excluding lithium and oxygen.

The second cathode active material may be at least one selected from lithium transition metal composite oxides represented by chemical formulas 1 to 3.

[Chemical Formula 1] LiNiₐCo_{b}Mn_{c}O₂,

where 0.8≤a<1, 0<b<0.2, 0<c<0.2, and a+b+c=1.

[Chemical Formula 2] LiNi_{d}CoₑAl_{f}O₂, where 0.8≤d<1, 0<e<0.2, 0<f<0.2, and d+e+f=1.

[Chemical Formula 3] LiNi_{g}CoₕMnᵢAlⱼO₂,

where 0.8≤g<1, 0<h<0.2, 0<i<0.2, 0<j<0.2, and g+h+i+j=1.

The first cathode mixture layer may further include a second cathode active material.

The first cathode active material may be included in an amount of 20 to 50 wt% based on a total weight of a cathode active material included in the first cathode mixture layer.

A weight ratio of the first cathode active material and the second cathode active material included in the first cathode mixture layer may be 20:80 to 80:20.

A thickness ratio of the first cathode mixture layer and the second cathode mixture layer may be 1:9 to 9:1.

With respect to a total weight of a cathode active material included in the first cathode mixture layer and the second cathode mixture layer, a content of the first cathode active material may be 10 wt% or more and less than 50 wt%.

In some embodiments of the present disclosure, a lithium secondary battery includes the cathode; and an anode.

The anode may include a silicon-based anode active material.

### BRIEF DESCRIPTION OF DRAWINGS

Certain aspects, features, and advantages of the present disclosure are illustrated by the following detailed description with reference to the accompanying drawings.
FIG. 1 is a schematic drawing illustrating a cross-section of a cathode for a lithium secondary battery according to an embodiment.
FIGS. 2A to 2E are SEM images of cross-sections of cathodes for a lithium secondary battery obtained in Examples 1 to 2 and Comparative Examples 1 to 3 in an embodiment of the present disclosure, respectively.

### DETAILED DESCRIPTION

Features of the present disclosure disclosed in this patent document are described by example embodiments with reference to the accompanying drawings.

Hereinafter, the present disclosure will be described in detail with reference to the attached drawings. However, this is merely illustrative and the present disclosure is not limited to the detailed embodiments described as illustrative.

The present disclosure relates to a cathode for a lithium secondary battery and a lithium secondary battery including the same, and more specifically, to a cathode including lithium transition metal composite oxide particles including nickel, as a cathode active material, which is provided to prevent the problems of a cathode including lithium transition metal composite oxide particles as a cathode active material while maintaining the safety of the battery.

Among the lithium transition metal composite oxide particles including nickel, cathode active materials such as NCM, NCMA, and NCA may increase the energy density of the secondary battery because the higher the nickel content, the more lithium may enter the lithium layer compared to other metals, and the price competitiveness may be increased because the content of expensive cobalt among the raw materials included in the active material may be reduced.

However, as the nickel content in the lithium transition metal composite oxide particles increases, an inactive structure is generated due to the structural characteristics of nickel, which may cause degradation of the cathode active material and a problem of reduced thermal stability.

Meanwhile, a single-crystal cathode active material refers to a material made of multiple metals such as nickel and cobalt in a single particle shape (one-body), and since multiple metal particles are configured as a single particle, the gas generation is reduced, so the stability is increased, and the battery lifespan may also be increased compared to the existing battery lifespan, and the battery capacity may also be increased.

Accordingly, the present disclosure provides a cathode for a lithium secondary battery having excellent storage performance and lifespan characteristics, reduced gas generation, and improved swelling phenomenon, and a lithium secondary battery including the same.

### Cathode for Lithium Secondary Battery

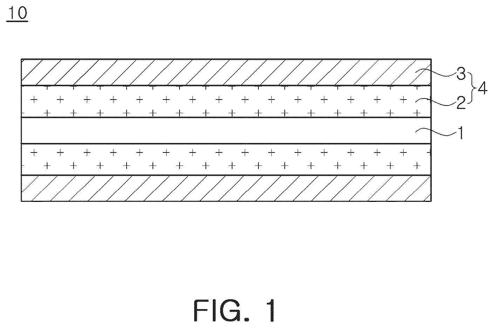

As an embodiment, a cathode in the present disclosure may be a multilayer cathode including a first cathode mixture layer 2 and a second cathode mixture layer 3 on at least one surface of a cathode current collector 1. FIG. 1 is a drawing schematically illustrating a cross-section of a cathode 10 for a lithium secondary battery according to an embodiment.

Referring to FIG. 1, the cathode 10 for a lithium secondary battery according to an embodiment may include a cathode current collector 1; a first cathode mixture layer 2 disposed on at least one surface of the cathode current collector 1, including a first cathode active material which is a lithium transition metal composite oxide particle having a single-crystal structure; and a second cathode mixture layer 3 disposed on the first cathode mixture layer 2, and including a second cathode active material which is a lithium transition metal composite oxide particle having a secondary particle structure.

The cathode current collector 1 may include stainless steel, nickel, aluminum, titanium, or alloys thereof. The cathode current collector 1 may also include aluminum surface-treated with carbon, nickel, titanium, or silver, or stainless steel surface-treated with carbon, nickel, titanium, or silver. A thickness of the cathode current collector 1 is not limited thereto, but may be, for example, 10 to 50 µm.

The cathode current collector 1 may have various forms, such as a foil, a foam, a net, a porous body, a non-woven body, and the like, as non-limiting examples.

In the present disclosure, the second cathode mixture layer 3 formed on the first cathode mixture layer 2 may be formed directly on the first cathode mixture layer 2 and in contact with the first cathode mixture layer 2. In addition, in the present disclosure, another layer may be interposed between the first cathode mixture layer 2 and the second cathode mixture layer 3.

In the present disclosure, the first cathode mixture layer 2, which is the lower layer of the cathode mixture layer 4 having a multilayer structure, may include the first cathode active material, which is a lithium transition metal composite oxide particle having a single-crystal structure. By including the first cathode active material, which is a lithium transition metal composite oxide particle having a single-crystal structure with high particle strength, in the first cathode mixture layer 2, which is the lower layer of the cathode, the particle breakage of the active material is reduced, thereby reducing damage to the substrate, improving the fracture phenomenon, and reducing the amount of gas generation even during high-temperature storage due to the improvement in particle breakage, while reducing the side reaction on the cathode surface.

However, as the content of lithium transition metal composite oxide particles including a single-crystal structure in the active material increases, the cathode 10 for a lithium secondary battery may obtain effects such as prevention of substrate damage, improvement of fracture phenomenon, and reduction of gas generation, but the rate of increase in resistance during the room temperature lifespan may be high, and the time point of sudden decline in the room temperature lifespan may be accelerated.

On the other hand, as the content of lithium transition metal composite oxide particles including a single-crystal structure in the active material decreases, the overvoltage applied to the cathode surface may be lowered, the rate of increase in resistance during the room temperature lifespan may be reduced, and the time point of sudden decline in the room temperature lifespan may be delayed.

Accordingly, in the present disclosure, the first cathode mixture layer 2, which is a lower layer in the cathode mixture layer 4 having a multilayer structure, may include a first cathode active material, which is a lithium transition metal composite oxide particle having a single-crystal structure, and the second cathode mixture layer 3, which is an upper layer in the cathode mixture layer 4 having a multilayer structure, may include a second cathode active material, which is a lithium transition metal composite oxide particle having a secondary particle structure.

In an embodiment, the cathode may reduce damage to the cathode current collector 1 and improve high-temperature storage performance by disposing the first cathode mixture layer 2, which includes the first cathode active material, which is a lithium transition metal composite oxide particle having a single-crystal structure, in the lower layer.

In addition, the cathode of an embodiment may improve the lifespan characteristics by lowering the overvoltage applied to the cathode surface by disposing the second cathode mixture layer 3 including the second cathode active material, which is a lithium transition metal composite oxide particle including a secondary particle structure, in the upper layer.

Ni may be provided as a transition metal related to the output and capacity of a lithium secondary battery. Therefore, as described above, by employing a high-content (High-Ni) composition in the cathode active material, a high-capacity cathode and a high-capacity lithium secondary battery may be provided.

However, as the content of Ni increases, the long-term storage stability and lifespan stability of the cathode or secondary battery may be relatively deteriorated, and side reactions with the electrolyte may also increase. However, according to example embodiments, while maintaining electrical conductivity by including Co, lifespan stability and capacity maintenance characteristics may be improved through Mn.

In an embodiment, the first cathode active material includes nickel, and the nickel content of the first cathode active material may be 80 mol% or more of the total elements excluding lithium and oxygen, in detail, 85 mol% or more, and in more detail, 86 mol% or more. When the nickel content of the first cathode active material of the total elements excluding lithium and oxygen is 80 mol% or more, the energy density of the lithium secondary battery may be high.

The first cathode active material may include at least one material having a nickel content of 80 mol% or more of the total elements excluding lithium and oxygen.

The first cathode active material may be a lithium-transition metal composite oxide including a transition metal such as nickel or cobalt, and specifically may be an NCM, NCA, or NCMA-based cathode active material. More specifically, the first cathode active material may be at least one selected from lithium-transition metal composite oxides represented by Chemical Formulas 1 to 3.

[Chemical Formula 1] LiNiₐCoₙMn_{c}O₂

In chemical formula 1 above, 0.8≤a<1, 0<b<0.2, 0<c<0.2, a+b+c=1.

[Chemical Formula 2] LiNi_{d}CoₑAl_{f}O₂

In chemical formula 2 above, 0.8≤d<1, 0<e<0.2, 0<f<0.2, d+e+f=1.

[Chemical Formula 3] LiNi_{g}CoₕMnᵢAlⱼO₂

In chemical formula 3 above, 0.8≤g<1, 0<h<0.2, 0<i<0.2, 0<j<0.2, g+h+i+j=1.

In an embodiment, the second cathode active material includes nickel, and the nickel content of the second cathode active material may be 80 mol% or more of the total elements excluding lithium and oxygen, specifically 85 mol% or more, and more specifically 86 mol% or more. When the nickel content of the second cathode active material of the total elements excluding lithium and oxygen is 80 mol% or more, the energy density of the lithium secondary battery may be high.

The second cathode active material may include at least one material having a nickel content of 80 mol% or more of the total elements excluding lithium and oxygen.

If the first cathode active material and the second cathode active material each include a single-crystal and a secondary particle structure, the nickel content of the total elements excluding lithium and oxygen may be independent of each other. For example, the first cathode active material may be a lithium transition metal composite oxide particle having a nickel content of 80 mol% in a single crystal, and the second cathode active material may be a lithium transition metal composite oxide particle having a nickel content of 90 mol% in a secondary particle, but is not particularly limited thereto.

The second cathode active material may be a lithium transition metal composite oxide including a transition metal such as nickel or cobalt, and specifically, may be a cathode active material of the NCM, NCA, or NCMA series. More specifically, the second cathode active material may be at least one selected from lithium transition metal composite oxides represented by chemical formulas 1 to 3.

[Chemical Formula 1] LiNiₐCo_{b}Mn_{c}O₂

In chemical formula 1 above, 0.8≤a<1, 0<b<0.2, 0<c<0.2, a+b+c=1.

[Chemical Formula 2] LiNi_{d}CoₑAl_{f}O₂

In chemical formula 2 above, 0.8≤d<1, 0<e<0.2, 0<f<0.2, d+e+f=1.

[Chemical Formula 3] LiNi_{g}CoₕMnᵢAlⱼO₂

In chemical formula 3 above, 0.8≤g<1, 0<h<0.2, 0<i<0.2, 0<j<0.2, g+h+i+j=1.

As described above, in an embodiment, a cathode includes a first cathode mixture layer 2 including a first cathode active material, which is a lithium transition metal composite oxide particle including a single-crystal structure, disposed on a cathode current collector 1, and a second cathode mixture layer 3 including a second cathode active material, which is a lithium transition metal composite oxide particle including a secondary particle structure, disposed on the first cathode mixture layer 2, so that storage performance and lifespan characteristics may be excellent while reducing gas generation and improving swelling phenomena.

In an embodiment, the first cathode mixture layer 2 may further include a second cathode active material. The first cathode mixture layer 2 includes the first cathode active material, which is a lithium transition metal composite oxide particle having a single-crystal structure, and further includes the second cathode active material, which is a lithium transition metal composite oxide particle having a secondary particle structure, thereby preventing damage to the substrate and ensuring lifespan stability.

With respect to the total weight of the cathode active material included in the first cathode mixture layer 2, the first cathode active material may be included in an amount of 20 to 80 wt%, specifically 20 to 50 wt%, and more specifically 25 to 50 wt%. If the content of the first cathode active material is less than 20 wt%, particle breakage of the active material may increase, thereby increasing damage to the substrate. In addition, if the content of the first cathode active material exceeds 80 wt%, premature decline in the room temperature lifespan may occur.

In an embodiment, the weight ratio of the first cathode active material and the second cathode active material included in the first cathode mixture layer may be 20:80 to 80:20, specifically 25:75 to 80 to 20. If the weight of the first cathode active material included in the first cathode mixture layer is less than 20 wt%, damage to the substrate may increase as particle breakage of the active material increases, and also, if the content of the first cathode active material exceeds 80 wt%, an early decrease in the room temperature lifespan may occur.

In addition, with respect to the total weight of the cathode active material included in the first cathode mixture layer and the second cathode mixture layer, the content of the first cathode active material may be 10 wt% or more and less than 50 wt%, and specifically 12.5 to 40 wt%. With respect to the total weight of the cathode active material, if the content of the first cathode active material is less than 10 wt%, the particle breakage of the active material may increase, which may increase damage to the substrate, and if it exceeds 50 wt%, the early drop in the room temperature lifespan may occur.

In an embodiment, with respect to the total weight of the cathode active material included in the second cathode mixture layer 3, the content of the second cathode active material may be 50 wt% or more, specifically 60 wt% or more, and more specifically 100 wt%.

The thickness ratio of the first cathode mixture layer 2 and the second cathode mixture layer 3 may be 1:9 to 9:1, specifically 3:7 to 7:3, and more specifically 5:5.

For example, the first cathode slurry or the second cathode slurry may be prepared by mixing the first cathode active material and/or the second cathode active material in a solvent. After coating the first cathode slurry on a cathode current collector, drying is performed, and the second cathode slurry is coated on the dried first cathode slurry, drying is performed, and rolling is performed to prepare the first cathode mixture layer 2 and the second cathode mixture layer 3. The coating process may be performed by methods such as gravure coating, slot die coating, multilayer simultaneous die coating, imprinting, doctor blade coating, dip coating, bar coating, casting, or the like, but is not limited thereto. The first cathode mixture layer 2 or the second cathode mixture layer 3 may further include a binder and optionally may further include a conductive agent, a thickener, and the like.

Non-limiting examples of solvents used in the manufacture of the cathode mixture layer include N-methyl-2-pyrrolidone (NMP), dimethylformamide, dimethylacetamide, N,N-dimethylaminopropylamine, ethylene oxide, tetrahydrofuran, and the like.

The binder may include polyvinylidene fluoride (PVDF), vinylidene fluoride-co-hexafluoropropylene copolymer, polyacrylonitrile, polymethylmethacrylate, acrylonitrile butadiene rubber (NBR), polybutadiene rubber (BR), styrene-butadiene rubber (SBR), or the like. In an embodiment, a PVDF series binder may be used as the cathode binder.

The conductive agent may be added to enhance mobility of lithium ions or electrons and/or the conductivity of the first cathode mixture layer 2 or the second cathode mixture layer 3. For example, the conductive agent may include, but is not limited to, a carbon-based conductive agent such as graphite, carbon black, acetylene black, Ketjen black, graphene, carbon nanotubes, vapor-grown carbon fiber (VGCF), carbon fiber, or the like, and/or a metal-based conductive agent including a perovskite material such as tin, tin oxide, titanium oxide, LaSrCoO₃ or LaSrMnO₃, and the like.

If necessary, the cathode mixture layer 4 may further include a thickener and/or a dispersant, and the like. In an embodiment, the cathode mixture layer 4 may include a thickener such as carboxymethyl cellulose (CMC).

### Lithium Secondary Battery

In another embodiment, a lithium secondary battery may include a cathode and an anode. In detail, the lithium secondary battery may include the cathode and anode described above.

The anode may be manufactured by applying an anode mixture slurry containing an anode active material, a binder, and a solvent, and optionally a conductive agent and a thickener, onto an anode current collector, and drying and rolling.

The anode active material may be a carbon-based anode active material. The carbon-based anode active material may be suitably used in the present disclosure if it is commonly used in the manufacture of an anode of a secondary battery, and may include a crystalline carbon-based active material such as artificial graphite and natural graphite, without particular limitation, and the artificial graphite or natural graphite may be amorphous, plate-like, flake-like, spherical, fibrous, or combinations thereof.

The anode active material may include artificial graphite and natural graphite alone or in combination. When mixing the artificial graphite and natural graphite, the mixing ratio may be 70:30 to 95:5 by weight. Meanwhile, the artificial graphite may further improve the dispersibility of the slurry and may improve the lifespan and high-temperature storage characteristics.

In addition, the anode may include a silicon (Si)-based anode active material. The Si-based anode active material may be Si, a Si-C composite, SiOₓ (0<x<2), or a Si-Q alloy. In the Si-Q alloy, Q may be an element selected from a group consisting of alkali metals, alkaline earth metals, Group 13 elements, Group 14 elements, Group 15 elements, Group 16 elements, transition metals, rare earth elements, and combinations thereof, other than Si, and specifically, may be selected from a group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

In general, it is known that Si-based anode active materials have a characteristic of large volume change as an anode active material. In this case, a silicon-based anode active material may be added and included together with a carbon-based anode active material such as graphite, and at this time, carbon nanotubes may be included as a conductive agent to prevent swelling due to volume expansion of the silicon-based anode active material.

In addition, the anode may include at least one of a tin (Sn)-based anode active material or a lithium vanadium oxide anode active material, and such anode active material may be used together with the carbon-based anode active material. When mixing the non-carbon-based anode active material as described above with the carbon-based anode active material, the non-carbon-based anode active material may be included in a range of 1 to 50 wt% with respect to the total anode active material weight.

The Sn-based anode active material may be Sn, SnO₂, or a Sn-R alloy. In the Sn-R alloy, R may be an element selected from the group consisting of alkali metals, alkaline earth metals, Group 13 elements, Group 14 elements, Group 15 elements, Group 16 elements, transition metals, rare earth elements, and combinations thereof, other than Sn and Si, and specifically, may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, In, Tl, Ge, P, As, Sb, Bi, S, Se, Te, Po, and combinations thereof. In addition, at least one thereof may be mixed with SiO₂ and used.

The content of the anode active material in the anode mixture layer may be 94 to 98 wt% based on the total weight of the anode mixture layer.

The conductive agent is used to impart conductivity to the electrode, and may be used without limitation if it is commonly used in secondary batteries, and for example, a carbon-based material such as natural graphite, artificial graphite, carbon black, acetylene black, Ketjen black, carbon fiber, or carbon nanotube; a metal-based material such as metal powder or metal fiber such as copper, nickel, aluminum, or silver; a conductive polymer such as a polyphenylene derivative; or a conductive material including a mixture thereof may be used.

The content of the conductive agent may be 0.1 to 3 wt% based on the total weight of the anode mixture layer.

The binder binds the anode active materials to each other and also binds the anode active material to the anode current collector, and an aqueous binder may be used, but is not limited thereto.

The aqueous binder may include styrene-butadiene rubber (SBR), acrylated styrene-butadiene rubber, acrylonitrile-butadiene rubber, acrylic rubber, butyl rubber, ethylene-propylene copolymer, polyepichlorohydrin, polyphosphazene, polyacrylonitrile, polystyrene, ethylene-propylene-diene copolymer, polyvinylpyridine, chlorosulfonated polyethylene, latex, polyester resin, acrylic resin, phenol resin, epoxy resin, polyvinyl alcohol resin, acrylate resin, or combinations thereof.

The content of the binder may be 1.5 to 3 wt% with respect to the total weight of the anode mixture layer.

The thickener is for imparting viscosity, and may include a cellulose-based compound, for example, carboxymethyl cellulose, hydroxypropyl methyl cellulose, or methyl cellulose, or one or more of alkali metal salts thereof may be mixed and used. The alkali metal may be Na, K, or Li.

The thickener may be used in an amount of 0.1 to 3 parts by weight based on 100 parts by weight of the anode active material.

The solvent may be an aqueous solvent such as water.

In the present disclosure, the anode current collector may be at least one selected from the group consisting of copper foil, nickel foil, stainless steel foil, titanium foil, nickel foam, copper foam, a polymer substrate coated with a conductive metal, and combinations thereof.

The thickness of the anode current collector is not particularly limited, and may be, for example, 5 to 30 µm.

As described above, by applying the anode mixture slurry to one or both sides of the anode current collector, drying, and rolling, an anode having an anode mixture layer formed on the anode current collector may be manufactured. At this time, the anode mixture layer may be a single layer, two layers, or three or more layers.

Drying and rolling for manufacturing the anode mixture layer may be performed by the same method as described in the manufacturing of the cathode mixture layer described above, and a detailed description thereof is omitted.

### Examples

Hereinafter, the present disclosure will be described in more detail through examples. The following examples are intended to illustrate the present disclosure and are not intended to limit the present disclosure.

### Manufacturing Examples

### 1. Example 1

Based on the solid weight, a first cathode active material, single-crystal NCM(Ni88), and a second cathode active material, secondary particle NCM(Ni85), were mixed at a weight ratio of 1:1 to prepare a cathode active material of 97.86 wt%, and the cathode active material of 97.86 wt%, a PVDF binder of 1 wt%, and a CNT, carbon black conductive agent of 1.14 wt% were mixed in an NMP solvent to prepare a first cathode slurry for forming a first cathode mixture layer.

Based on the solid weight, 98.28 wt% of secondary particle NCM(Ni85), which is the second cathode active material, 1 wt% of PVDF binder, and 0.72 wt% of CNT conductive agent were mixed in NMP solvent to prepare a second cathode slurry for forming a second cathode mixture layer.

The first cathode slurry was applied to both sides of aluminum foil (thickness: 12 µm) as a cathode current collector, dried, and then the second cathode slurry was applied on the dried first cathode slurry, dried, and then rolled to prepare a two-layer cathode, which is illustrated in Table 1.

The cathode of Example 1 that was manufactured had a thickness of 108 mm, and the thickness ratio of the first cathode mixture layer and the second cathode mixture layer was 5:5.

### 2. Example 2

A two-layer cathode was manufactured in the same manner as Example 1, except that as the cathode active material included in the first cathode slurry, the first cathode active material, single-crystal NCM(Ni88), and the second cathode active material, secondary particle NCM(Ni85), were adjusted to a weight ratio of 4:1, and this is illustrated in Table 1.

The manufactured cathode of Example 2 had a thickness of 108 mm, and the thickness ratio of the first cathode mixture layer and the second cathode mixture layer was 5:5.

### 3. Example 3

A two-layer cathode was manufactured in the same manner as Example 1, except that as the cathode active material included in the first cathode slurry, the first cathode active material, single-crystal NCM(Ni88), and the second cathode active material, secondary particle NCM(Ni85), were adjusted to a weight ratio of 1:3, and this is illustrated in Table 1.

The manufactured cathode of Example 3 had a thickness of 108 mm, and the thickness ratio of the first cathode mixture layer and the second cathode mixture layer was 5:5.

### 4. Example 4

A two-layer cathode was manufactured in the same manner as Example 1, except that as the cathode active material included in the first cathode slurry, the first cathode active material, single-crystal NCM(Ni88), and the second cathode active material, secondary particle NCM(Ni85), were adjusted to a weight ratio of 85:15, and this is illustrated in Table 1.

The manufactured cathode of Example 4 had a thickness of 108 mm, and the thickness ratio of the first cathode mixture layer and the second cathode mixture layer was 5:5.

### 5. Example 5

A two-layer cathode was manufactured in the same manner as Example 1, except that as the cathode active material included in the first cathode slurry, the first cathode active material, single-crystal NCM(Ni88), and the second cathode active material, secondary particle NCM(Ni85), were adjusted to a weight ratio of 16:84, and this is illustrated in Table 1.

The manufactured cathode of Example 5 had a thickness of 108 mm, and the thickness ratio of the first cathode mixture layer and the second cathode mixture layer was 5:5.

### 6. Example 6

A two-layer cathode was manufactured in the same manner as Example 1, except that as the cathode active material included in the first cathode slurry, the weight of the single-crystal NCM(Ni88), which is the first cathode active material, was adjusted to 100 wt% with respect to the total weight of the cathode active material, and this is illustrated in Table 1.

The manufactured cathode of Example 6 had a thickness of 108 mm, and the thickness ratio of the first cathode mixture layer and the second cathode mixture layer was 5:5.

### 7. Comparative Example 1

Based on the solid weight, the first cathode active material, single-crystal NCM(Ni88), and the second cathode active material, secondary particle NCM(Ni85), were mixed in a weight ratio of 1:3, to prepare 97.86 wt% of cathode active material, and 97.86 wt% of cathode active material, 1 wt% of PVDF binder, and 1.14 wt% of CNT, carbon black conductive agent were mixed in NMP solvent to prepare a slurry for forming a cathode mixture layer.

The slurry for forming a cathode mixture layer was applied to both sides of aluminum foil (thickness: 12 µm) as a cathode current collector, dried, and then rolled to prepare a single-layer cathode, which is illustrated in Table 1.

The cathode of Comparative Example 1 that was manufactured had a thickness of 108 mm.

### 8. Comparative Example 2

Except that the first cathode active material, single-crystal NCM(Ni88), and the second cathode active material, secondary particle NCM(Ni85), were mixed at a weight ratio of 2:2, a single-layer cathode was manufactured in the same manner as Comparative Example 1, and this is illustrated in Table 1.

The manufactured cathode of Comparative Example 2 had a thickness of 108 mm.

### 9. Comparative Example 3

Except that the first cathode active material, single-crystal NCM(Ni88), and the second cathode active material, secondary particle NCM(Ni85), were mixed at a weight ratio of 3:2, a single-layer cathode was manufactured in the same manner as Comparative Example 1, and this is illustrated in Table 1.

The cathode of the manufactured Comparative Example 3 had a thickness of 108 mm.

### 10. Comparative Example 4

Except that the weight of the second cathode active material, the secondary particle NCM(Ni85), was 100 wt% with respect to the total weight of the cathode active material in the cathode active material of Comparative Example 1, and this is illustrated in Table 1.

The cathode of the manufactured Comparative Example 4 had a thickness of 108 mm.

### 11. Comparative Example 5

Except that the weight of the first cathode active material, the single-crystal NCM(Ni88), was 100 wt% with respect to the total weight of the cathode active material in the cathode active material of Comparative Example 1, and this is illustrated in Table 1.

The cathode of the manufactured comparative example 5 had a thickness of 108 mm.

### 12. Manufacturing of Lithium Secondary Battery

Silicon, artificial graphite, carbon nanotubes (CNT), SBR, and CMC were dispersed in distilled water at a weight ratio of 14:82.95:0.25:1.5:1.3 to manufacture an anode slurry.

The anode slurry was applied to an area of a copper foil excluding a protrusion, the copper foil including the protrusion (anode tab) on one side, and dried and rolled to manufacture an anode.

The secondary battery cells manufactured by interposing a polyolefin separator between the cathodes of Examples 1 to 6 and Comparative Examples 1 to 5 and the anode manufactured above were placed in a secondary battery pouch, and then an electrolyte solution in which 1.1 M LiPF6 was dissolved in a solvent mixed with ethylene carbonate (EC), propylene carbonate (PC), and ethyl methyl carbonate (EMC) was injected into the secondary battery pouch, followed by sealing to manufacture a pouch-type lithium secondary battery. The manufactured pouch-type lithium secondary battery was applied as a secondary battery sample of Examples 1 to 6 and Comparative Examples 1 to 5.

**[Table 1]**

| | Electrode Structure | Content (wt%) of Single-Crystal Active Material in Upper Layer Active Material | Content (wt%) of Single-Crystal Active Material in Lower Layer Active Material | Content (wt%) of Single-Crystal Active Material in Total Active Material |
|---|---|---|---|---|
| Example 1 | Second Layer | 0 | 50 | 25 |
| Example 2 | Second Layer | 0 | 80 | 40 |
| Example 3 | Second Layer | 0 | 25 | 12.5 |
| Example 4 | Second Layer | 0 | 85 | 42.5 |
| Example 5 | Second Layer | 0 | 16 | 8 |
| Example 6 | Second Layer | 0 | 100 | 50 |
| Comparative Example 1 | First Layer | 25 | 25 | 25 |
| Comparative Example 2 | First Layer | 50 | 50 | 50 |
| Comparative Example 3 | First Layer | 60 | 60 | 60 |
| Comparative Example 4 | First Layer | 0 | 0 | 0 |
| Comparative Example 5 | First Layer | 100 | 100 | 100 |

### Evaluation Example

### 1. Comparison of Cross-sections of Cathodes

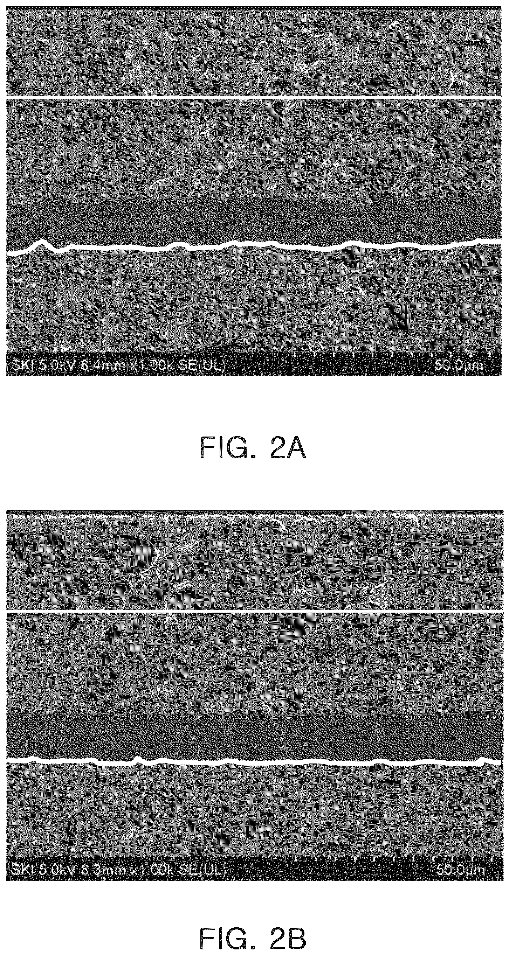

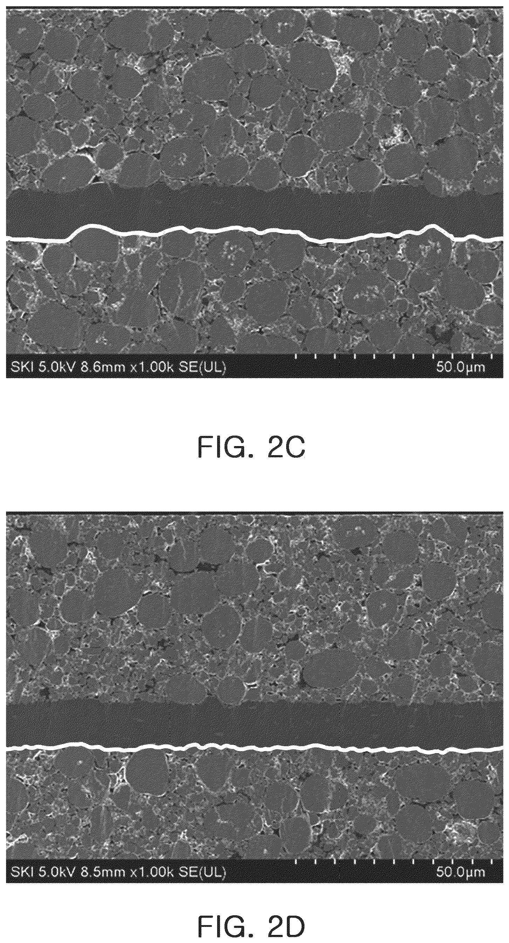

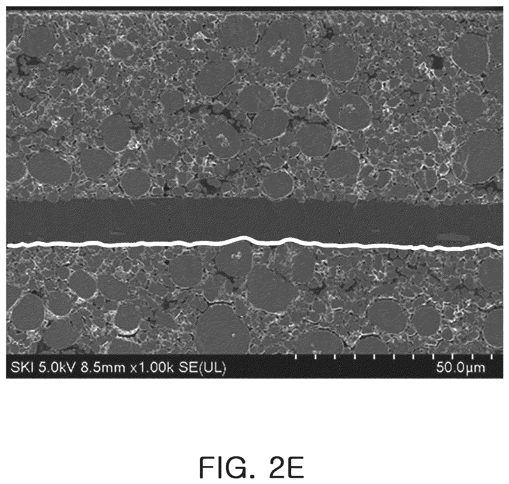

The cross-sections of the cathodes manufactured in Examples 1 to 2 and Comparative Examples 1 to 3 were photographed using SEM, and are illustrated in FIGS. 2A to 2E.

Referring to FIGS. 2A to 2E, it can be confirmed that the cross-section of the mixture layer in contact with the cathode current collector becomes more uniform as the content of the single-crystal cathode active material included in the lower layer or the entire active material increases.

In detail, the cross-section of FIG. 2B, which illustrates the cathode cross-section of Example 2 in which the content of single-crystal active material in the lower layer active material is 80 wt%, is more uniform than the cross-section of FIG. 2A, which illustrates the cathode cross-section of Example 1 in which the content of single-crystal active material in the lower layer active material is 50 wt%. It can be confirmed that the cathode cross-section becomes uniform, when comparing FIGS. 2C to 2E, in which the content of single-crystal cathode active material included in the entire active material increases.

This may mean that the damage to the cathode substrate decreases as the content of single-crystal cathode active material included in the lower layer or the entire active material increases.

### 2. Comparison of Gas Generation Amount during High-temperature Storage

The lithium secondary batteries of Examples 1 to 6 and Comparative Examples 1 to 5 were charged to 100% SOC under 0.3C, 4.2V, and 0.05C cut-off conditions, and then stored at high temperature at 60°C. The cell vent time due to gas generation was confirmed, and this is illustrated in Table 2 below.

**[Table 2]**

| | Electrode Structure | High Temperature (60°C) |
|---|---|---|
| | | Storage Vent Time (weeks) |
| Example 1 | Second Layer | 21 |
| Example 2 | Second Layer | 22 |
| Example 3 | Second Layer | 19 |
| Example 4 | Second Layer | 23 |
| Example 5 | Second Layer | 17 |
| Example 6 | Second Layer | 23 |
| Comparative Example 1 | First Layer | 20 |
| Comparative Example 2 | First Layer | 22 |
| Comparative Example 3 | First Layer | 24 |
| Comparative Example 4 | First Layer | 16 |
| Comparative Example 5 | First Layer | 26 |

Referring to Table 2 above, it can be confirmed that the gas generation amount of Comparative Example 4, which has the lowest single-crystal content in the entire active material, is high and the vent point in time is the fastest, and the gas generation amount of Comparative Example 5, which has the highest single-crystal content, is low and the vent point in tie is delayed.

### 3. Room Temperature Life Cycle Evaluation

### (1) Discharge Capacity Retention Rate

The lithium secondary batteries of Examples 1 to 6 and Comparative Examples 1 to 5 were repeatedly subjected to charge/discharge cycles of CC/CV charging (0.33C 4.2V 0.05C CUT-OFF) at 25°C, and then leaving for 10 minutes, and CC discharging (0.5C 2.5V CUT-OFF), and then leaving for 10 minutes, and the results are illustrated in Table 3 below.

### (2) Resistance Increase Rate

The lithium secondary batteries of Examples 1 to 6 and Comparative Examples 1 to 5 were repeatedly subjected to a charge/discharge cycle of CC/CV charging (0.33C 4.2V 0.05C CUT-OFF) at 25°C, and then leaving for 10 minutes, and CC discharging (0.5C 2.5V CUT-OFF), and then leaving for 10 minutes. At this time, the resistance value was calculated by dividing the difference between the voltage V1 CC discharge start and the voltage V2 after 10 seconds of discharge at the SOC100% point by the discharge current. Therefore, the resistance R in each cycle is (V1-V2)/I_{discharge current}(mohm) X 1000, and calculated as the increase rate value (R_{cycle}-R1)/R1*100(%) of resistance R_{cycle} with respect to the resistance R1 measured when the charge/discharge cycle was performed once is illustrated in Table 3 below.

**[Table 3]**

| | Electrode Structure | Content (wt%) of single-crystal active material in total active material | Room temperature lifespan (25°C) | Room temperature lifespan (25°C) |
|---|---|---|---|---|
| | | | Discharge capacity retention rate (%) (@400 times) | Resistance ((V1-V2)/I Discharge current (mohm) X 1000) |
| | | | | Increase rate (%) (@400 times) |
| Example 1 | Second Layer | 25 | 91.2 | 2.1 |
| Example 2 | Second Layer | 40 | 90.5 | 4.1 |
| Example 3 | Second Layer | 12.5 | 91.8 | -2.2 |
| Example 4 | Second Layer | 42.5 | 89.4 | 6.8 |
| Example 5 | Second Layer | 8 | 92.1 | -2.6 |
| Example 6 | Second Layer | 50 | 89.1 | 10.7 |
| Comparative Example 1 | First Layer | 25 | 90.7 | 4.9 |
| Comparative Example 2 | First Layer | 50 | 88.7 | 12.4 |
| Comparative Example 3 | First Layer | 60 | 83.2 | 32.8 |
| Comparative Example 4 | First Layer | 0 | 92.3 | 2.9 |
| Comparative Example 5 | First Layer | 100 | 78.4 | 46.8 |

Referring to Table 3, it can be confirmed that the cathode with a low content of single-crystal active material in the entire active material has excellent discharge capacity retention rate and resistance increase rate at room temperature. On the other hand, it can be confirmed that the cathode with a high content of single-crystal active material in the entire active material has inferior discharge capacity retention rate and resistance increase rate.

In addition, when comparing Example 1 and Comparative Example 1, which have the same content (weight %) of single-crystal active material in the entire active material but different electrode structures, it can be confirmed that the discharge capacity retention rate and resistance increase rate at room temperature of Example 1, which does not include single-crystal in the upper layer, are better.

Furthermore, when comparing Example 1 and Comparative Example 2 and Example 3 and Comparative Example 1, which have the same content (weight %) of single-crystal active material in the lower layer but different electrode structures, it can be confirmed that the discharge capacity retention rate and resistance increase rate at room temperature of Example 1 and Example 3, which do not include single-crystal in the upper layer, are superior.

As set forth above, a cathode for a lithium secondary battery according to an embodiment may have excellent storage performance and lifespan characteristics.

A cathode for a lithium secondary battery according to an embodiment may have reduced gas generation and improved swelling.

A lithium secondary battery according to an embodiment may have excellent performance even when stored for a long time at high temperatures and reduced gas generation.

Only specific examples of implementations of certain embodiments are described. Variations, improvements and enhancements of the disclosed embodiments and other embodiments may be made based on the disclosure of this patent document.

The present disclosure may also relate to the following aspects.

Aspect 1) A cathode for a lithium secondary battery may comprise a cathode current collector; a first cathode mixture layer disposed on at least one surface of the cathode current collector, and including a first cathode active material being a lithium transition metal composite oxide particle having a single-crystal structure; and a second cathode mixture layer disposed on the first cathode mixture layer, and including a second cathode active material being a lithium transition metal composite oxide particle having a secondary particle structure.

Aspect 2) In aspect 1, the first cathode active material may include nickel, and a nickel content of the first cathode active material is 80 mol% or more of all elements excluding lithium and oxygen.

Aspect 3) In aspects 1 or 2, the first cathode active material may be at least one selected from lithium transition metal composite oxides represented by Chemical Formula 1, LiNiₐCo_{b}Mn_{c}O₂, where 0.8≤a<1, 0<b<0.2, 0<c<0.2, and a+b+c=1, Chemical Formula 2, LiNi_{d}CoₑAl_{f}O₂, where 0.8≤d<1, 0<e<0.2, 0<f<0.2, and d+e+f=1, and Chemical Formula 3, LiNi_{g}CoₕMnᵢAlⱼO₂, where 0.8≤g<1, 0<h<0.2, 0<i<0.2, 0<j<0.2, and g+h+i+j=1.

Aspect 4) In anyone of aspects 1 to 3, the second cathode active material may include nickel, and a nickel content of the second cathode active material is 80 mol% or more of all elements excluding lithium and oxygen.

Aspect 5) In anyone of aspects 1 to 4, the second cathode active material may be at least one selected from lithium transition metal composite oxides represented by Chemical Formula 1, LiNiₐCo_{b}Mn_{c}O₂, where 0.8≤a<1, 0<b<0.2, 0<c<0.2, and a+b+c=1, Chemical Formula 2, LiNi_{d}CoₑAl_{f}O₂, where 0.8≤d<1, 0<e<0.2, 0<f<0.2, and d+e+f=1, and Chemical Formula 3, LiNi_{g}CoₕMnᵢAlⱼO₂, where 0.8≤g<1, 0<h<0.2, 0<i<0.2, 0<j<0.2, and g+h+i+j=1.

Aspect 6) In anyone of aspects 1 to 5, the first cathode mixture layer may further include a second cathode active material.

Aspect 7) In anyone of aspects 1 to 6, the first cathode active material may be included in an amount of 20 to 50 wt% based on a total weight of a cathode active material included in the first cathode mixture layer.

Aspect 8) In aspect 6, a weight ratio of the first cathode active material and the second cathode active material included in the first cathode mixture layer may be 20:80 to 80:20.

Aspect 9) In anyone of aspects 1 to 8, a thickness ratio of the first cathode mixture layer and the second cathode mixture layer may be 1:9 to 9:1.

Aspect 10) In anyone of aspects 1 to 9, with respect to a total weight of a cathode active material included in the first cathode mixture layer and the second cathode mixture layer, a content of the first cathode active material may be 10 wt% or more and less than 50 wt%.

Aspect 11) A lithium secondary battery may comprise the cathode of anyone of aspects 1 to 10; and an anode.

Aspect 12) In aspect 11, the anode may include a silicon-based anode active material.

## Claims

1. A cathode for a lithium secondary battery, comprising:
a cathode current collector;
a first cathode mixture layer disposed on at least one surface of the cathode current collector, and including a first cathode active material being a lithium transition metal composite oxide particle having a single-crystal structure; and
a second cathode mixture layer disposed on the first cathode mixture layer, and including a second cathode active material being a lithium transition metal composite oxide particle having a secondary particle structure.

2. The cathode for a lithium secondary battery of claim 1, wherein the first cathode active material includes nickel, and
a nickel content of the first cathode active material is 80 mol% or more of all elements excluding lithium and oxygen.

3. The cathode for a lithium secondary battery of claim 1 or 2, wherein the first cathode active material is at least one selected from lithium transition metal composite oxides represented by Chemical Formula 1, LiNiₐCo_{b}Mn_{c}O₂, where 0.8≤a<1, 0<b<0.2, 0<c<0.2, and a+b+c=1, Chemical Formula 2, LiNi_{d}CoₑAl_{f}O₂, where 0.8≤d<1, 0<e<0.2, 0<f<0.2, and d+e+f=1, and Chemical Formula 3, LiNi_{g}CoₕMnᵢAlⱼO₂, where 0.8≤g<1, 0<h<0. 2, 0<i<0.2, 0<j<0.2, and g+h+i+j=1.

4. The cathode for a lithium secondary battery of anyone of claim 1 to 3, wherein the second cathode active material includes nickel, and
a nickel content of the second cathode active material is 80 mol% or more of all elements excluding lithium and oxygen.

5. The cathode for a lithium secondary battery of anyone of claim 1 to 4, wherein the second cathode active material is at least one selected from lithium transition metal composite oxides represented by Chemical Formula 1, LiNiₐCo_{b}Mn_{c}O₂, where 0.8≤a<1, 0<b<0.2, 0<c<0.2, and a+b+c=1, Chemical Formula 2, LiNi_{d}CoₑAl_{f}O₂, where 0.8≤d<1, 0<e<0.2, 0<f<0.2, and d+e+f=1, and Chemical Formula 3, LiNi_{g}CoₕMnᵢAlⱼO₂, where 0.8≤g<1, 0<h<0.2, 0<i<0.2, 0<j<0.2, and g+h+i+j=1.

6. The cathode for a lithium secondary battery of anyone of claim 1 to 5, wherein the first cathode mixture layer further includes a second cathode active material.

7. The cathode for a lithium secondary battery of anyone of claim 1 to 6, wherein the first cathode active material is included in an amount of 20 to 50 wt% based on a total weight of a cathode active material included in the first cathode mixture layer.

8. The cathode for a lithium secondary battery of claim 6, wherein a weight ratio of the first cathode active material and the second cathode active material included in the first cathode mixture layer is 20:80 to 80:20.

9. The cathode for a lithium secondary battery of anyone of claim 1 to 8, wherein a thickness ratio of the first cathode mixture layer and the second cathode mixture layer is 1:9 to 9:1.

10. The cathode for a lithium secondary battery of anyone of claim 1 to 9, wherein with respect to a total weight of a cathode active material included in the first cathode mixture layer and the second cathode mixture layer, a content of the first cathode active material is 10 wt% or more and less than 50 wt%.

11. A lithium secondary battery comprising the cathode of anyone of claim 1 to 10; and an anode.

12. The lithium secondary battery of claim 11, wherein the anode includes a silicon-based anode active material.
